# EUROPEAN PATENT APPLICATION

(11) **EP 4 538 529 A1**
(43) Date of publication of application: **16.04.2025**
(21) Application number: 23202598.1
(22) Date of filing: 10.10.2023
(51) Int. Cl.: F03D 80/00, A62C 3/16, F03D 80/80

(54) **A WALL ELEMENT FOR A WIND TURBINE**

(71) Applicant: Nordex Energy SE & Co. KG, 22419 Hamburg (DE)
(72) Inventor: Kremer, Jochen, 22419 Hamburg (DE); Eppler, Christian, 22419 Hamburg (DE)
(74) Representative: Hauck Patentanwaltspartnerschaft mbB

(57) **Abstract**

A wall element configured to provide fire control in a wind turbine, the wall element comprising:
• a heat-resistant base material comprising a plurality of holes configured to allow air flowing through,
• a fire control layer arranged in a vicinity of the holes, wherein the layer is arranged such that it does not prevent air from flowing through the holes,
• wherein the fire control layer is configured to melt and to clog the holes in case of fire.

## Description

The invention relates to a wall element for a wind turbine. Wind turbines have a tower and a nacelle arranged at the top of the tower. In operation, various equipment inside the tower and the nacelle cause electrical and mechanical heat losses, and the heat needs to be dissipated to the environment. To this end, walls of the wind turbine, such as partition walls in the nacelle or in the tower as well as outer walls of the nacelle or the tower, are often provided with holes to allow air flowing therethrough, also referred to as ventilation holes.

When a part of a wind turbine catches fire, this may cause significant damage. In addition, men and animals may be injured by falling parts. The large dimensions of wind turbines and the fact that their towers can act like a chimney makes it difficult to keep or bring the fire under control.

The document US 2007/0145752 A1 describes a wind turbine with a fire extinguishing apparatus that shall flood the wind turbine with an inert atmosphere.

The document WO 2008/146345 A1 describes a wind turbine having an opening part equipped with a closing device for closing an opening formed in a structure in which devices and the like are stored, when a fire occurs. The closing device comprises a sheet member formed in a bag shape. The sheet member is inflated by a high-pressure gas so as to close the opening when a fire occurs.

The document US 2016129289 A1 relates to a wind turbine fire suppression system using an admixture of hydrated super absorbent polymer having properties for suppressing and extinguishing of a fire. The admixture is maintained within a pressurized storage vessel having a solenoid that is released by temperature sensor applying the admixture through strategically positioned nozzles to the control cabinets, generator, gearbox and bearings for extinguishment of any associated fire.

Departing therefrom, it is an object of the invention to provide a wall element for a wind turbine allowing for simple and effective fire control.

This object is solved by the wall element configured to provide fire control in a wind turbine of claim 1. Preferred aspects of the invention are given in the dependent claims. The wall element comprises:
- a heat-resistant base material comprising a plurality of holes configured to allow air flowing through,
- a fire control layer arranged in a vicinity of the holes, wherein the layer is arranged such that it does not prevent air from flowing through the holes,
- wherein the fire control layer is configured to melt and to clog the holes in case of fire.

The wall element in use forms a part of a wall of the wind turbine. The wall separates a first room from a second room. The first room may for example be an interior room of the wind turbine, such as an interior room of a wind turbine tower or of a wind turbine nacelle, the second room may be any other interior room of the wind turbine, or may just refer to the outside of the wind turbine. In other words, the wall may be any wall of a wind turbine separating two areas or rooms from one another. Examples of such walls include: an outer tower wall, and outer nacelle wall, a partition wall or door within a wind turbine tower or within a wind turbine nacelle, any door or wall within a wind turbine rotor, a wall or door of a switch cabinet, a floor plate or platform, and so on.

The heat-resistant base material has a plurality of holes configured to allow air flowing through, so that the wall element allows an exchange of air and heat to a desired degree. The heat resistant base material may comprise, for example, metal such as steel or concrete. Heat-resistant means that material will withstand heat occurring in case of fire as required by the relevant regulations. The heat-resistant base material provides the wall element defined with the desired stiffness and rigidity.

In addition to the heat-resistant base material, the wall element comprises a fire control layer which is arranged in a vicinity of the holes. This layer is arranged such that it does not prevent air from flowing through the holes, so that it does not block the airflow and allows for the desired degree of air and heat exchange.

In accordance with the invention, the fire control layer is configured to melt and to clog the holes in case of fire. As a consequence, when exposed to heat and/or smoke gas, the fire control layer will melt and will no longer remain in its initial shape and/or position. Instead, elements of the fire control layer will impair the airflow through the holes to a certain degree, so that the holes essentially will be clogged. The inventors found that by clogging the holes in this way, efficient fire control is achieved. On one hand, clogging the holes in the heat-resistant base material will efficiently suppress air exchange, so that the fire will receive less oxygen. On the other hand, clogging of the holes efficiently suppresses heat exchange, so that spreading of flames to the other side of the heat-resistant base material is prevented.

As mentioned above, in its initial configuration, that is before having been exposed to heat of a fire, the fire control layer is arranged such that it does not prevent air from flowing through the holes. To this end, the fire control layer can be arranged at a distance from the holes, so that air flowing through the holes can pass between the heat-resistant base material and the fire control layer, possibly beyond an edge of the fire control layer. In addition or in the alternative, the fire control layer may have an open structure, so that air can flow through the fire control layer. For example, the fire control layer may have a mesh-like or porous structure. When air can flow through the fire control layer at a sufficient rate, the fire control layer may be arranged directly on an outer surface of the heat-resistant base material.

In an aspect, the heat-resistant base material is a metal sheet. A metal sheet provides adequate stiffness and heat-resistance and can easily be adapted to the required shape. For example, the metal sheet may consist of steel.

In an aspect, the holes have a size in the range of 2 mm to 20 mm. It was found that holes in this size range provide a good compromise between sufficient airflow and the ability to be clogged by the fire control layer.

In an aspect, a material of the fire control layer has a melting point below 1. 100°C. The melting point should be selected such that it melts in case of fire. In general, an even lower melting point may be desired, so that the clogging of the holes occurs at an early stage. However, when the melting point is too low, the clogging effect may become less efficient, once temperature rises and the material of the fire control layer may evaporate. The fire control layer may consist of the material with the melting point below 1. 100°C, but it may comprise one or more additional materials as well. The distribution of the material with the defined melting point is selected such that the fire control layer changes its shape when the material with the defined melting point is melting, so that the desired clogging of the holes occurs.

In an aspect, the fire control layer comprises a flexible material. This flexible material provides flexibility to the entire fire control layer which can help to maintain the fire control layer initially in a desired position.

In an aspect, the fire control layer comprises a metal mesh, in particular of aluminium or copper. The mesh structure provides flexibility and/or deformability to the fire control layer, which makes it easy to arrange the fire control layer with reference to the heat-resistant base material in a desired position. Also, the mesh structure may help achieving sufficient airflow through the wall element. Further, as a side effect, a metal mesh integrated into the fire control layer may provide electromagnetic compatibility by shielding the holes.

In an aspect, a first section of the heat-resistant base material is arranged horizontally, and at least some of the holes are arranged in the first section. This is an option whenever the wall element shall be integrated into a more or less horizontal wall, such as a platform. The wall element then closes a passage through which heat and/or fire may spread upwards.

In an aspect, the fire control layer is arranged at a distance from the holes arranged in the first section, either underneath and/or above these holes. It was found that a sufficient clogging of the holes can be obtained by this arrangement of the fire control layer.

In an aspect, a second section of the heat-resistant base material is arranged vertically and at least some of the holes are arranged in the second section. In this aspect, a wall with vertical arrangement, such as a door or a partition wall, can be equipped with the wall element. The holes provide a heat exchange opportunity between adj acent rooms and will be clogged by the fire control layer as explained above.

In an aspect, the fire control layer is arranged in a lateral distance from the holes arranged in the second section. It was found that when the fire control layer melts, the holes will be clogged efficiently, even if the fire control layer is not arranged directly at the holes, but in certain lateral distance. This distance may be in the range of for example 0.5 cm to 20 cm, in particular in a range of 3 cm to 10 cm.

In an aspect, the wall element is arranged in a platform for a tower of a wind turbine, wherein in particular, the platform is configured to be installed at a top end of the tower. The heat-resistant base material may be configured such that it forms an integral part of the platform, possibly suitable for standing thereon. The platform may be installed at an intermediate height of the tower, in particular near or at a top end of the tower. In any event, wind turbine towers due to their height require efficient fire protection control, because of a strong chimney effect that can occur when heated air flows upwards within the tower. With efficient fire protection control in particular at a top end of the tower, it can be ensured that the flames do not spread over to a nacelle, thereby limiting damages to the wind turbine.

In an aspect, the heat-resistant base material forms a tubular wall comprising at least some of the holes. The tubular wall may be used in particular in combination with a platform in a wind turbine tower, through which various cables leading from the nacelle to a tower foundation need to be guided through. The tubular wall can be fixed at the platform surrounding cables routing from the nacelle down to the tower. The cables can be guided through the tubular wall. The holes in the tubular wall help achieving the required heat exchange, and will be clogged by the fire control layer as described above.

In an aspect, the fire control layer is arranged in a lateral distance from the holes of the tubular wall, either at an inner side of the tubular wall and/or at an outer side of the tubular wall. In both cases, efficient clogging of the holes can be obtained in case of fire. The lateral distance may be in the range of for example 0.5 cm to 20 cm, in particular in a range of 3 cm to 10 cm. Of course, as mentioned above, the fire control layer may in the alternative be arranged directly on the inner side of the tubular wall and/or directly on the outer side of the tubular wall. When the fire control layer is arranged at an outer side (directly or with a lateral distance) of the tubular wall, the inner side can essentially consist of the heat-resistant base material which is relatively robust and can withstand interaction with any cables guided through the tubular wall.

In an aspect, the invention is directed to a wind turbine comprising a wall element according to any of the claims 1 to 13.

The above object is also solved by the use of a layer described in claim 15. The layer can melt in case of fire and is used as a fire control layer of a wall element of a wind turbine, wherein
- the fire protection control system comprises a heat-resistant base material having a plurality of holes configured to allow air flowing through,
- the fire control layer is arranged in a vicinity of the holes such that it does not prevent air from flowing through the holes, and
- in case of fire, the fire control layer melts and clogs the holes.

With regard to the features of the use of a layer that can melt in case of fire as a fire control layer, reference is made to the above explanations of the fire protection control system, which apply correspondingly.

In the following, the invention is explained in greater detail with reference to embodiments shown in figures.
- Fig. 1: shows a platform of a wind turbine tower in a schematic top view,
- Fig. 2: shows the platform of Fig. 1 arranged in a wind turbine tower schematically and in cross-section,
- Fig. 3: shows a wind turbine in a schematic view.

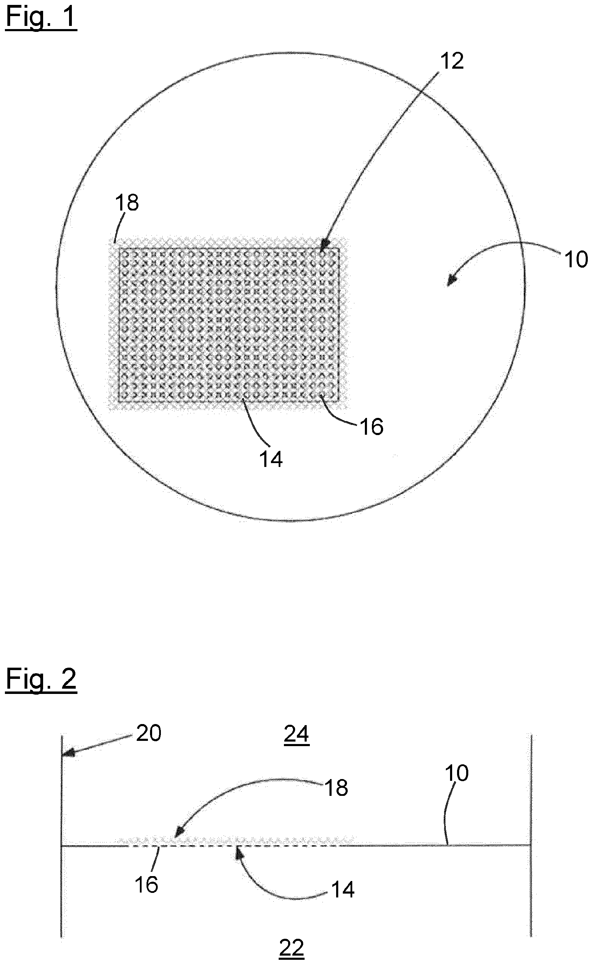

Figure 1 shows a platform 10. The platform 10 is circular, corresponding to the cross-section of a wind turbine tower, and is arranged horizontally at a top end of the wind turbine tower.

The platform 10 comprises a wall element 12 having a heat-resistant base material 14 provided with a plurality of holes 16. The heat-resistant base material 14 is a steel sheet and forms a wall element with which is an integral part of the platform 10. The steel sheet has a rectangular shape and is arranged horizontally within the platform 10. On top of the heat-resistant base material 14, there is arranged a fire control layer 18 consisting of a copper mesh. The shape of the fire control layer 18 corresponds to the heat-resistant base material, wherein the rectangular dimensions of the fire control layer 18 are large enough to cover the plurality of holes 16.

In the cross-sectional view of Fig. 2 one can see an outer tower wall 20, and the platform 10 arranged horizontally within the wind turbine tower, thereby separating a first room 22 within the wind turbine tower below the platform 10 from a second room 24 within the wind turbine tower above the platform 10.

The number and dimensions of the holes 16 in the heat-resistant base material 14 are selected such that adequate heat exchange between the first room 22 and the second room 24 is obtained. The fire control layer 18 formed by the copper mesh is placed on top of the heat-resistant base material 14, whereas the distance and/or air permeability of the fire control layer 18 is selected that the fire control layer 18, which is arranged in a vicinity of the holes 16, does not prevent air from flowing through the holes 16.

In case of fire, in particular in the first room 22 below the platform 10, the wall element will be exposed to heat, so that the fire control layer 18 will melt and clog the holes 16.

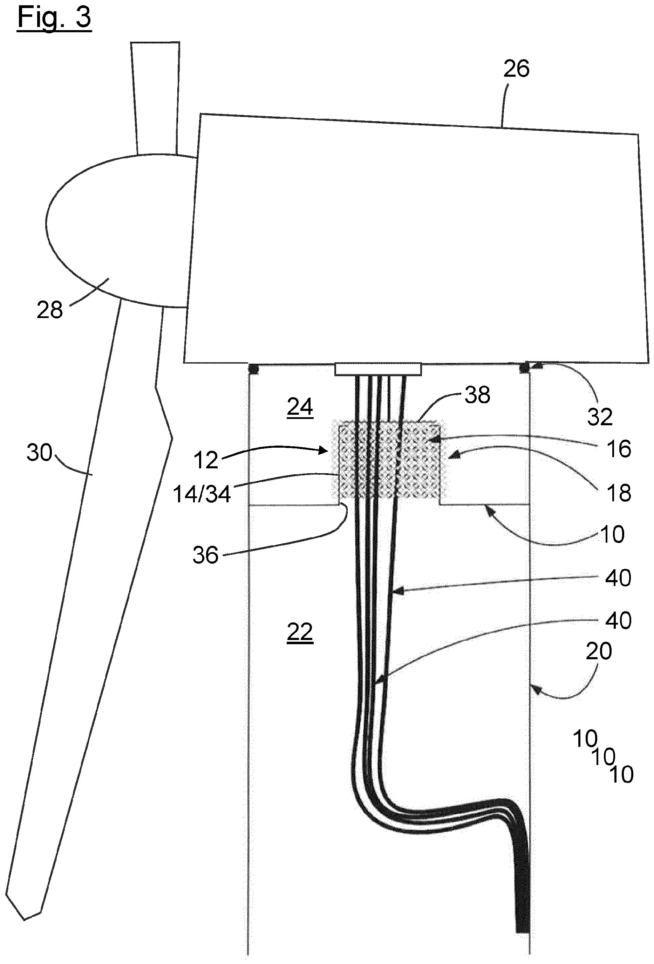

Figure 3 schematically shows a wind turbine with a wind turbine tower having a tower wall 20, a nacelle 26 and a rotor 28 with a number of rotor blades 30. The rotor 28 has an essentially horizontal axis, and the nacelle 26 is connected to the wind turbine tower via a yaw bearing 32 such that the rotor 28 can be directed towards the wind.

Within the wind turbine tower, near a top end, a platform 10 is arranged horizontally. It serves as a working platform and also separates the first room 22 below the platform 10 from the second room 24 above the platform 10. The platform 10 comprises a wall element 12 with a heat-resistant base material 14 forming a tubular wall 34. The tubular wall 34 is arranged on top of the platform 10, whereas the platform 10 has a large through-hole 36 corresponding approximately to the interior of the tubular wall 34.

The tubular wall 34 comprises the heat-resistant base material 14 and has a plurality of holes 16. The upper end of the tubular wall 34 is closed by a plate 38 which is fixed at and rotates with the nacelle 26 (details not shown). A plurality of cables 40 are guided from the nacelle 26 through the plate 38 and the interior of the tubular wall 34 downwards towards an intermediate or lower section of the wind turbine tower, where they are fixed to the tower wall 20.

The wall element 12, in addition to the tubular wall 34, comprises a fire control layer 18 in the form of a copper mesh arranged at an outer side of the tubular wall 34, either at a lateral distance from the tubular wall 34 or in direct contact with the outer side thereof.

### List of reference numerals

- 10: platform
- 12: wall element
- 14: heat-resistant base material
- 16: hole
- 18: fire control layer
- 20: tower wall
- 22: first room
- 24: second room
- 26: nacelle
- 28: rotor
- 30: rotor blade
- 32: yaw bearing
- 34: tubular wall
- 36: through-hole
- 38: plate
- 40: cable

## Claims

1. A wall element (12) configured to provide fire control in a wind turbine, the wall element (12) comprising:
• a heat-resistant base material (14) comprising a plurality of holes (16) configured to allow air flowing through,
• a fire control layer (18) arranged in a vicinity of the holes (16), wherein the layer (18) is arranged such that it does not prevent air from flowing through the holes (16),
• wherein the fire control layer (18) is configured to melt and to clog the holes (16) in case of fire.

2. The wall element (12) of claim 1, wherein the heat-resistant base material (14) is a metal sheet.

3. The wall element (12) of claim 1 or 2, wherein the holes (16) have a size in the range of 2 mm to 20 mm.

4. The wall element (12) of any of the claims 1 to 3, wherein a material of the fire control layer (18) has a melting point below 1.100 °C.

5. The wall element (12) of any of the claims 1 to 4, wherein the fire control layer (18) comprises a flexible material.

6. The wall element (12) of any of the claims 1 to 5, wherein the fire control layer (18) comprises a metal mesh, in particular of aluminium or copper.

7. The wall element (12) of any of the claims 1 to 6, wherein a first section of the heat-resistant base material (14) is arranged horizontally, and at least some of the holes (16) are arranged in the first section.

8. The wall element (12) of claim 7, wherein the fire control layer (18) is arranged at a distance from the holes arranged in the first section, either underneath and/or above these holes.

9. The wall element (12) of any of the claims 1 to 8, wherein a second section of the heat-resistant base material (14) is arranged vertically, and at least some of the holes (16) are arranged in the second section.

10. The wall element (12) of claim 9, wherein the fire control layer (18) is arranged in a lateral distance from the holes (16) arranged in the second section.

11. The wall element (12) of any of the claims 1 to 10, wherein the wall element (12) is arranged in a platform (10) for a tower of a wind turbine, wherein in particular, the platform (10) is configured to be installed at a top end of the tower.

12. The wall element (12) of any of the claims 1 to 11, wherein the heat-resistant base material (14) forms a tubular wall (34) comprising at least some of the holes (16).

13. The wall element (12) of claim 12, wherein the fire control layer (18) is arranged in a lateral distance from the holes (16) of the tubular wall (34), either at an inner side of the tubular wall (34) and/or at an outer side of the tubular wall (34).

14. A wind turbine comprising a wall element (12) according to any of the claims 1 to 13.

15. Use of a layer that can melt in case of fire as a fire control layer (18) of a wall element (12) configured to provide fire control in a wind turbine, wherein
• the wall element (12) comprises a heat-resistant base material (14) having a plurality of holes (16) configured to allow air flowing through,
• the fire control layer (18) is arranged in a vicinity of the holes (16) such that it does not prevent air from flowing through the holes (16), and
• in case of fire, the fire control layer (18) melts and clogs the holes (16).
